# EUROPEAN PATENT APPLICATION

(11) **EP 4 560 888 A1**
(43) Date of publication of application: **28.05.2025**
(21) Application number: 24210889.2
(22) Date of filing: 05.11.2024
(51) Int. Cl.: H02K 1/20, H02K 5/20

(54) **MOTOR**

(30) Priority: 21.11.2023 JP 2023197375
(71) Applicant: TOYOTA JIDOSHA KABUSHIKI KAISHA, Aichi-ken, 471-8571 (JP)
(72) Inventor: OHIRA, Kengo, Aichi-Ken, 471-851, (JP); ASAOKA, Hironori, Aichi-Ken, 471-851, (JP)
(74) Representative: D Young & Co LLP

(57) **Abstract**

A motor (10) includes a stator core (32), a case (50), and a guide ring (60). The case (50) includes a facing portion (54) facing an end face (32a) of the stator core (32). The guide ring (60) is interposed between the end face (32a) and the facing portion (54). An annular coolant flow channel (56) is configured by a space surrounded by an inner face of the case (50), an outer peripheral face of the guide ring (60), and the end face (32a). A plurality of in-core coolant flow channels (39) is provided inside the stator core (32). An inlet of each of the in-core coolant flow channels (39) opens onto the end face (32a) at a position on an outer side in a radial direction from the guide ring (60). The inlet of each of the in-core coolant flow channels (39) is connected to the annular coolant flow channel (56).

## Description

### BACKGROUND OF THE INVENTION

### 1. Field of the Invention

The technology disclosed in the present specification relates to a motor.

### 2. Description of Related Art

A motor disclosed in Japanese Unexamined Patent Application Publication No. 2017-204980 (JP 2017-204980 A) has a case, a stator core, and a guide ring. The stator core and the guide ring are housed in the case that has a cylindrical shape. The guide ring has a base portion in contact with an end face of the stator core, and an annular protruding portion extending outward in a radial direction from the base portion. A gap is provided between the annular protruding portion and the end face of the stator core. An outer peripheral face of the stator core and an outer peripheral face of the annular protruding portion are in contact with an inner peripheral face of the case. A space enclosed by the stator core, the guide ring, and the case, makes up an annular coolant flow channel. Also, a plurality of in-core coolant flow channels is provided inside the stator core. Inlets of the in-core coolant flow channels are connected to the annular coolant flow channel. When a coolant (e.g., oil) is supplied to the annular coolant flow channel from outside of the case, the coolant flows from the annular channel into each of the in-core coolant flow channels. Thus, the stator core is cooled from the inside thereof.

### SUMMARY OF THE INVENTION

In the motor according to JP 2017-204980 A, an outer peripheral face of the guide ring (i.e., the outer peripheral face of the annular protruding portion) is in contact with the inner peripheral face of the case. Accordingly, unless the diameters and degrees of roundness of each of the inner peripheral face of the case and the outer peripheral face of the guide ring are accurate, a gap will be formed between the case and the guide ring. When such a gap is formed between the case and the guide ring, problems such as lower accuracy of form of the overall motor, leakage of the coolant that is in the annular flow channel, and so forth, may occur. Also, when the inner peripheral face of the case and the outer peripheral face of the guide ring are machined with high precision such that no gap is formed between the case and the guide ring, problems arise such as increased processing costs, difficulty in inserting the guide ring into the case, and so forth. This specification proposes technology that enables a guide ring to be easily and appropriately disposed within a case of a motor.

A first aspect of the present disclosure is a motor. The motor includes a stator core, a case that houses the stator core, and a guide ring that is fashioned in a ring shape extending around a motor axis, that is housed in the case, and that is interposed between an end face of the stator core and a facing portion. The case includes the facing portion facing the end face of the stator core. An annular coolant flow channel is configured by a space surrounded by an inner face of the case, an outer peripheral face of the guide ring, and the end face. A plurality of in-core coolant flow channels is provided inside the stator core. An inlet of each of the in-core coolant flow channels opens onto the end face at a position on an outer side in a radial direction from the guide ring. The inlet of each of the in-core coolant flow channels is connected to the annular coolant flow channel.

Note that in the present specification, the term "radial direction" means a direction along the radius of a circle centered on the motor shaft.

With the motor according to the first aspect of the present disclosure, the guide ring is interposed and fixed between the end face of the stator core and the facing portion of the case, in the axial direction (i.e., a direction parallel to the motor shaft). Stacking the facing portion, the guide ring, and the stator core, in the axial direction, enables the guide ring to be easily fixed. Also, by stacking in this manner, the gap between the guide ring and the case can be reduced, regardless of accuracy of form of the guide ring. Thus, according to the structure of this motor, the guide ring can be easily and appropriately disposed within the case of the motor.

The motor according to the first aspect of the present disclosure may include a coil that is wound around the stator core at a position on an inner side in the radial direction from the guide ring. Each of the in-core coolant flow channels may include a first flow channel that is disposed on the outer side in the radial direction from the guide ring and that is connected to the inlet, a second flow channel that extends from a position on the outer side in the radial direction from the guide ring to a position on the inner side from the guide ring, and that is connected to the first flow channel, and a third flow channel that is disposed on the inner side in the radial direction from the guide ring, and that extends in an axial direction, and that is connected to the second flow channel.

In the motor according to the first aspect of the present disclosure, the second flow channel may extend in the radial direction.

With the motor according to the first aspect of the present disclosure, the coil can be cooled efficiently.

In the motor according to the first aspect of the present disclosure, the stator core may be made up of a plurality of magnetic steel plates stacked in the axial direction. The magnetic steel plates include a first magnetic steel plate, a second magnetic steel plate, and a third magnetic steel plate. The first magnetic steel plate that is present in a range including the end face, may be provided with a first through hole that is disposed on the outer side in the radial direction from the guide ring. The second magnetic steel plate that is adjacent to the first magnetic steel plate, may be provided with a second through hole extending along the radial direction. A third through hole may be provided in the third magnetic steel plate that is adjacent to the second magnetic steel plate. The third through hole is disposed on the inner side in the radial direction from the guide ring. The first through hole may make up the first flow channel. The second through hole may make up the second flow channel. The third through hole may make up the third flow channel.

With to the motor according to the first aspect of the present disclosure, the in-core coolant flow channel can be easily formed.

In the motor according to the first aspect of the present disclosure, the stator core may include a back yoke and a plurality of teeth protruding toward an inner side in the radial direction from the back yoke. The coil may be wound around the teeth. The third flow channel may be provided inside a corresponding one of the teeth.

In the motor according to the first aspect of the present disclosure, the third flow channel may be provided at a boundary between the back yoke and the corresponding one of the teeth.

With the motor according to the first aspect of the present disclosure, the coil can be cooled efficiently.

In the motor according to the first aspect of the present disclosure, the end face may be provided with a coil end. An inner diameter of the guide ring may be larger than an outer diameter of the coil end.

With the motor according to the first aspect of the present disclosure, the guide ring can be attached to the stator core in a state in which the coil is provided thereon.

In the motor according to the first aspect of the present disclosure, a coil end may be provided on the inner side in the radial direction from the guide ring. The guide ring may be provided with a coolant discharge channel that passes through the guide ring in the radial direction.

With the motor according to the first aspect of the present disclosure, the coil end can be cooled efficiently.

In the motor according to the first aspect of the present disclosure, the case may include a contact portion that comes into contact with the end face. A seal member may be provided at an interface of the end face and the contact portion.

With the motor according to the first aspect of the present disclosure, the coolant can be efficiently supplied to the in-core coolant flow channel.

In the motor according to the first aspect of the present disclosure, a recessed portion may be provided on an inner peripheral face of the case.

With the motor according to the first aspect of the present disclosure, even when recessed portions are provided on the inner peripheral face of the case, the guide ring can be appropriately provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is an exploded perspective view of a motor according to an embodiment;
FIG. 2 is a partial sectional view of the motor according to the embodiment;
FIG. 3 is a plan view of a stator as viewed in an axial direction;
FIG. 4 is an enlarged cross-sectional view of a guide ring and a periphery thereof;
FIG. 5 is an exploded perspective view of a stator core;
FIG. 6 is an enlarged plan view of a magnetic steel plate 36d;
FIG. 7 is an enlarged plan view of a magnetic steel plate 36d of a motor according to a first modification;
FIG. 8 is an enlarged plan view of a magnetic steel plate 36d of a motor according to a second modification;
FIG. 9 is an enlarged plan view of a magnetic steel plate 36d of a motor according to a third modification;
FIG. 10 is an enlarged plan view of a magnetic steel plate 36a of a motor according to a fourth modification; and
FIG. 11 is an enlarged plan view of a magnetic steel plate 36d of a motor according to a fifth modification.

### DETAILED DESCRIPTION OF EMBODIMENTS

An embodiment of the present disclosure will be described with reference to the drawings. Note that the embodiment described below is merely an example of a specific embodiment of the present disclosure and does not limit the present disclosure.

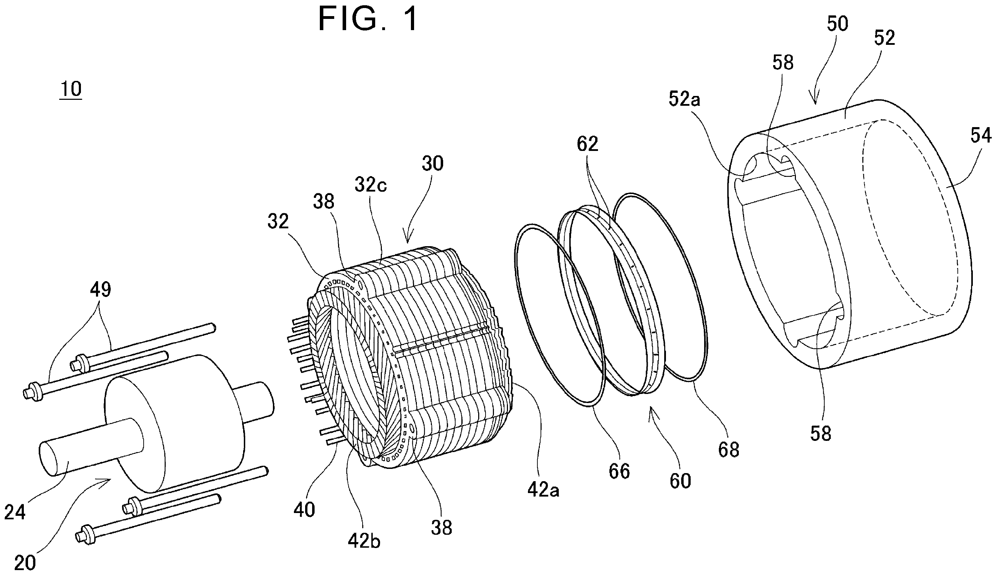

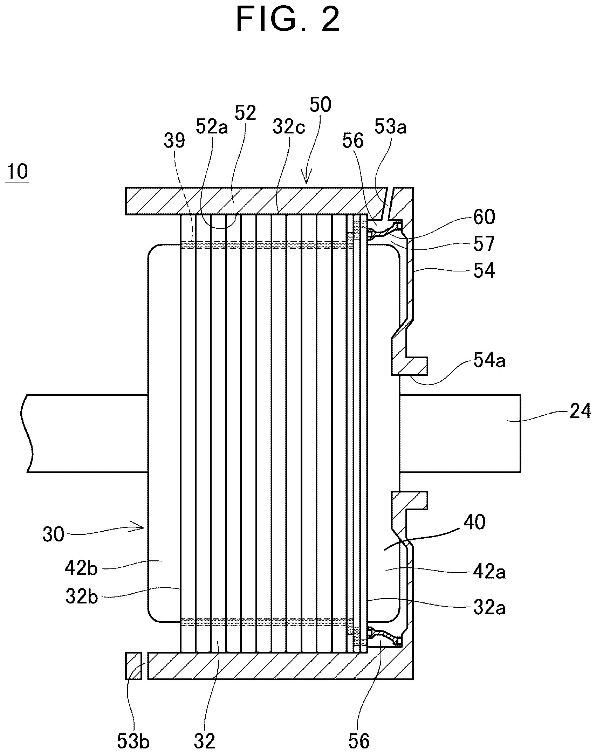

A motor 10 according to the embodiment illustrated in FIGS. 1 and 2 has a rotor 20, a stator 30, and a case 50. The rotor 20 has a shaft 24. The stator 30 has a cylindrical shape. The rotor 20 is disposed within a central hole of the stator 30 such that the central axis of the shaft 24 and the central axis of the stator 30 match. The rotor 20 and the stator 30 are housed in the case 50. Hereinafter, a direction parallel to the rotation axis of the motor 10 (i.e., the central axis of the shaft 24) will be referred to as "axial direction", and a direction along a radius of a circle centered on the rotation axis of the motor 10 will be referred to as "radial direction".

The case 50 has a cylindrical shape with a bottom, and has an outer peripheral wall 52 and a partition wall 54. The outer peripheral wall 52 has a tubular shape. The partition wall 54 is provided at one end portion of the outer peripheral wall 52 in the axial direction. The partition wall 54 is provided with a through hole 54a at the center thereof.

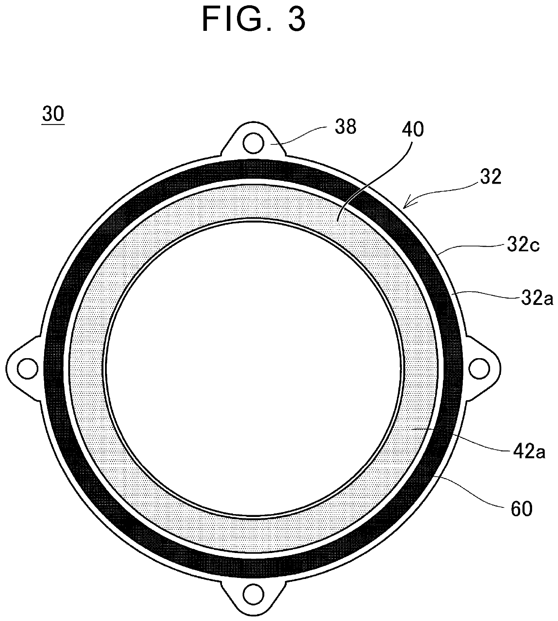

The stator 30 has a stator core 32 and a coil 40. Note that in FIG. 2, the coil 40 is illustrated in a simplified manner. The stator core 32 has a cylindrical shape. The coil 40 is wound around the stator core 32 (more specifically, teeth 34 described below). The stator core 32 has an end face 32a, an end face 32b, and an outer peripheral face 32c. The end face 32a is one end face of the stator core 32 in the axial direction, and the end face 32b is an end face that is opposite to the end face 32a. A coil end 42a is provided on the end face 32a. A coil end 42b is provided on the end face 32b. The coil ends 42a and 42b are bent portions of the coil 40 wound around the stator core 32. The coil end 42a protrudes from the end face 32a, and the coil end 42b protrudes from the end face 32b. As illustrated in FIG. 3, the coil end 42a is distributed in an annular shape on the end face 32a. In the same way, the coil end 42b is distributed in an annular shape on the end face 32b.

As illustrated in FIGS. 1 and 2, an inner face 52a of the outer peripheral wall 52 of the case 50 has a cylindrical shape that extends along the outer peripheral face 32c of the stator core 32. The inner face 52a of the outer peripheral wall 52 faces the outer peripheral face 32c of the stator core 32. The partition wall 54 of the case 50 faces the end face 32a of the stator core 32. The partition wall 54 is an example of a facing portion. As illustrated in FIG. 2, a gap is provided between the partition wall 54 and the end face 32a of the stator core 32, and the coil end 42a is disposed within this gap. As illustrated in FIG. 1, a plurality of protruding portions 38 is provided on the outer peripheral face 32c of the stator core 32. Also, a plurality of recessed portions 58 is provided on the inner face 52a of the outer peripheral wall 52. The stator core 32 is housed in the case 50 such that each protruding portion 38 is disposed in a corresponding recessed portion 58. Each protruding portion 38 is provided with a bolt fastening hole extending in the axial direction. A bolt 49 is inserted into each bolt fastening hole. The stator core 32 is fastened to the case 50 by the bolts 49.

The rotor 20 is disposed within a center hole of the stator core 32 in a concentric state with the stator core 32. The shaft 24 of the rotor 20 is inserted into the through hole 54a of the case 50. The rotor 20 is rotatably supported within the case 50 by bearings or the like.

As illustrated in FIGS. 1 and 2, the motor 10 has a guide ring 60. The guide ring 60 has a ring shape. As illustrated in FIG. 3, an outer diameter of the guide ring 60 (i.e., the diameter at the largest diameter portion) is smaller than the diameter of the outer peripheral face 32c of the stator core 32. An inner diameter of the guide ring 60 (i.e., the diameter at the smallest diameter portion) is larger than an outer diameter of the coil end 42a. As illustrated in FIGS. 1 and 2, the guide ring 60 is housed in the case 50. The guide ring 60 is disposed so as to extend annularly around the axis of the motor 10 (i.e., the shaft 24). The guide ring 60 is disposed in a concentric state with the rotor 20 and the stator core 32, between the end face 32a of the stator core 32 and the partition wall 54 of the case 50. The guide ring 60 is interposed and fixed between the end face 32a and the partition wall 54. The coil end 42a is disposed on an inner side in the radial direction from the guide ring 60. The guide ring 60 divides space between the stator core 32 and the partition wall 54 into an outer peripheral side space 56 and an inner peripheral side space 57. The outer peripheral side space 56 is a space surrounded by an inner face of the case 50, an outer peripheral face of the guide ring 60, and the end face 32a, and has an annular shape. Hereinafter, the outer peripheral side space 56 will be referred to as "annular coolant flow channel 56".

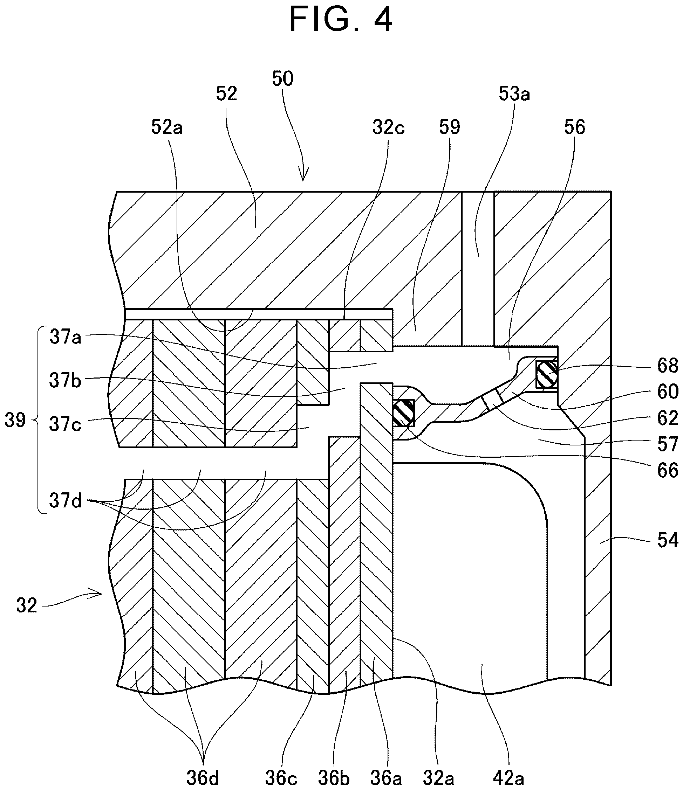

As illustrated in FIG. 4, one end portion of the guide ring 60 comes into contact with the end face 32a of the stator core 32. An O-ring 66 is provided at a connection portion between the guide ring 60 and the end face 32a. The O-ring 66 seals the connection portion between the guide ring 60 and the end face 32a. Note that other sealing members (e.g., a metal gasket, a liquid gasket, or the like) may be provided instead of the O-ring 66. Also, although the guide ring 60 is illustrated as being in contact with the end face 32a in FIG. 4, a configuration may be made in which the guide ring 60 is connected to the end face 32a via a sealing member (i.e., without the guide ring 60 itself being in contact with the end face 32a). The other end portion of the guide ring 60 is in contact with the partition wall 54. An O-ring 68 is provided at a connection portion between the guide ring 60 and the partition wall 54. The O-ring 68 seals the connection portion between the guide ring 60 and the partition wall 54. Note that other sealing members (e.g., a metal gasket, a liquid gasket, or the like) may be provided instead of the O-ring 68. Also, although the guide ring 60 is illustrated as being in contact with the partition wall 54 in FIG. 4, a configuration may be made in which the guide ring 60 is connected to the partition wall 54 via a sealing member (i.e., without the guide ring 60 itself being in contact with the partition wall 54).

A stepped portion 59 is provided on the inner face 52a of the case 50. The stepped portion 59 is provided over the entirety thereof in a peripheral direction. The end face 32a of the stator core 32 is in contact with the stepped portion 59 in the axial direction. The stepped portion 59 is an example of a contact portion. The end face 32a is in close contact with the stepped portion 59. Note that a seal member (for example, an O-ring, a metal gasket, a liquid gasket, or the like) may be provided at an interface of the end face 32a and the stepped portion 59.

The case 50 is provided with a coolant supply channel 53a. The coolant supply channel 53a connects outside of the case 50 to the annular coolant flow channel 56. As illustrated in FIG. 2, a coolant ejection channel 53b is provided at a lower portion of the case 50. The coolant ejection channel 53b connects inside and outside of the case 50. The coolant ejection channel 53b is connected to the coolant supply channel 53a via a circulation flow channel (omitted from illustration) provided outside the case 50. The circulation flow channel is provided with a pump (omitted from illustration). When the pump is operated, the coolant is supplied from the coolant supply channel 53a to the annular coolant flow channel 56. The coolant supplied to the annular coolant flow channel 56 flows inside of the case 50 and is ejected from the coolant ejection channel 53b to the circulation flow channel outside of the case 50, which will be described later in detail. Thus, the coolant circulates through the circulation flow channel and the case 50. In the present embodiment, the coolant is cooling oil. The cooling oil functions as a coolant that cools the motor 10, and also functions as a lubricating oil that lubricates the rotor 20.

As illustrated in FIG. 1, the guide ring 60 is provided with a plurality of coolant discharge channels 62. As illustrated in FIG. 4, each coolant discharge channel 62 passes through the guide ring 60 in the radial direction. As illustrated in FIG. 1, the guide ring 60 is provided with the coolant discharge channels 62 distributed in the peripheral direction. As illustrated in FIG. 4, the annular coolant flow channel 56 and the space 57 (i.e., the space in which the coil end 42a is present) are connected by the coolant discharge channels 62. Each coolant discharge channel 62 discharges the coolant in the annular coolant flow channel 56 toward the coil end 42a.

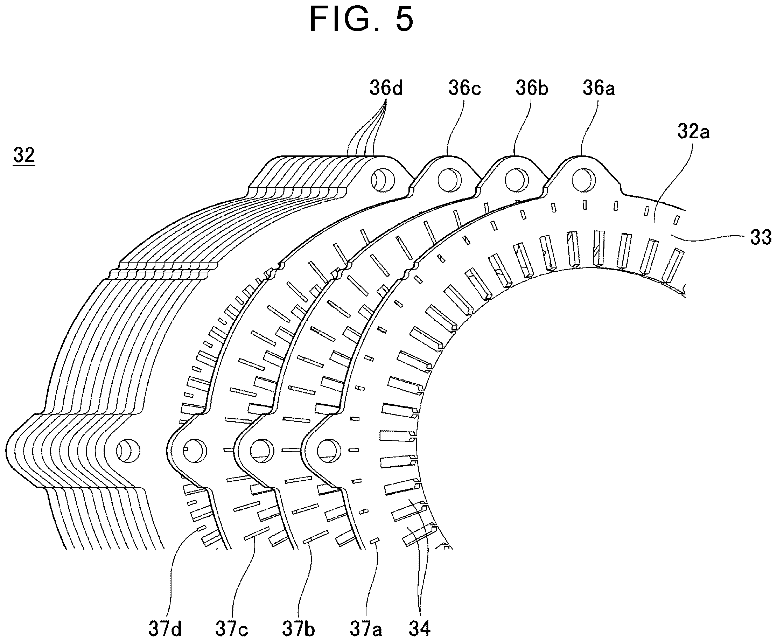

FIG. 5 is an exploded view of the stator core 32. As illustrated in FIG. 5, the stator core 32 is made up of a plurality of magnetic steel plates 36 stacked in the axial direction. The stator core 32 has a back yoke 33 and a plurality of the teeth 34. The back yoke 33 has a cylindrical shape. Each tooth 34 protrudes from an inner peripheral face of the back yoke 33. That is to say, each tooth 34 protrudes toward an inner side in the radial direction from the back yoke 33. Each tooth 34 extends in the radial direction. The teeth 34 are disposed at intervals in the peripheral direction. As described above, the coil 40 is wound around the teeth 34. Each tooth 34 is situated on the inner side in the radial direction from the guide ring 60. Accordingly, as illustrated in FIG. 3, the coil 40 is disposed on the inner side in the radial direction from the guide ring 60.

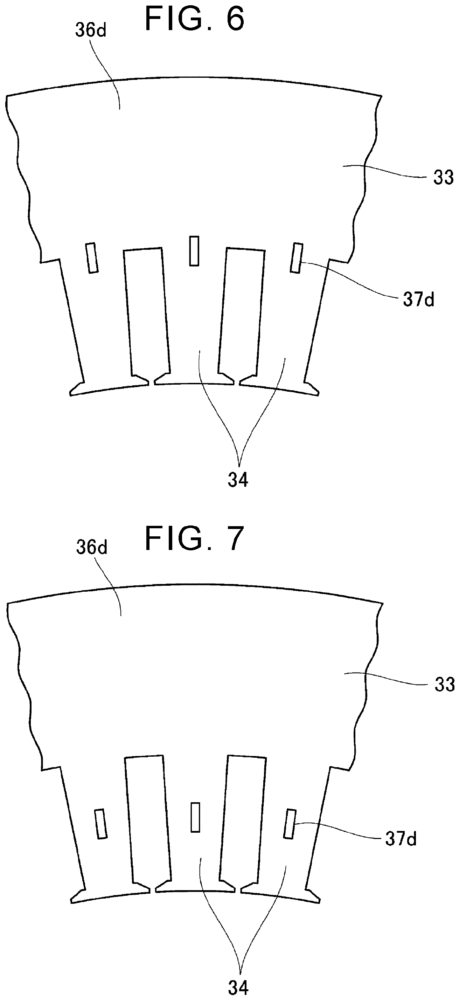

A magnetic steel plate 36a illustrated in FIG. 5 is a magnetic steel plate situated on an end in the axial direction out of the magnetic steel plates 36. The magnetic steel plate 36a makes up the end face 32a of the stator core 32. A magnetic steel plate 36b is adjacent to the magnetic steel plate 36a, and a magnetic steel plate 36c is adjacent to the magnetic steel plate 36b. A plurality of magnetic steel plates 36d is stacked at a position adjacent to the electromagnetic steel plate 36c. The magnetic steel plates 36a to 36c are thinner than the magnetic steel plates 36d. The magnetic steel plate 36a is provided with a plurality of through holes 37a passing through the magnetic steel plate 36a in a thickness direction thereof. The through holes 37a are provided distributed in the peripheral direction. As illustrated in FIG. 4, the through holes 37a are disposed on the outer side in the radial direction from the guide ring 60 and are connected to the annular coolant flow channel 56. As illustrated in FIG. 5, the magnetic steel plate 36b is provided with a plurality of through holes 37b passing through the magnetic steel plate 36b in the thickness direction thereof. Each through hole 37b is elongated in the radial direction. The through holes 37b are provided distributed in the peripheral direction at the same intervals as the through holes 37a. The magnetic steel plate 36c is provided with a plurality of through holes 37c passing through the magnetic steel plate 36c in the thickness direction. Each through hole 37c is elongated in the radial direction. The through holes 37c are provided distributed in the peripheral direction at the same intervals as the through holes 37a. Each electromagnetic steel plate 36d is provided with a plurality of through holes 37d passing through the magnetic steel plate 36d in the thickness direction. In each magnetic steel plate 36d, the through holes 37d are provided distributed in the peripheral direction at the same intervals as the through holes 37a. As illustrated in FIG. 4, the through holes 37d are disposed on the inner side in the radial direction from the guide ring 60. As illustrated in FIGS. 5 and 6, the through holes 37d are provided at a boundary between the back yoke 33 and the teeth 34. That is to say, the through holes 37d are provided spanning the back yoke 33 and the teeth 34.

As illustrated in FIG. 4, the through holes 37a to 37d are linked to one another to form in-core coolant flow channels 39 in the stator core 32. The through holes 37a each make up a first flow channel (hereinafter referred to as "first flow channel 37a") that makes up an inlet situated on the outer side in the radial direction from the guide ring 60 (i.e., an inlet that opens to the end face 32a). The through holes 37b and 37c each make up second flow channels (hereinafter referred to as "second flow channels 37b and 37c") that extend from a position on the other side the guide ring 60 to a position on the inner side thereof in the radial direction. The through holes 37d each make up a third flow channel (hereinafter referred to as "third flow channel 37d") that is situated on the inner side in the radial direction from the guide ring 60 and that also extends along the axial direction. The first flow channel 37a and the third flow channel 37d are connected by the second flow channels 37b and 37c. The first flow channel 37a, the second flow channels 37b and 37c, and the third flow channel 37d form the in-core coolant flow channel 39. A plurality of the in-core coolant flow channels 39 is provided distributed in the peripheral direction inside the stator core 32. As illustrated in FIG. 2, a downstream end of each in-core coolant flow channel 39 opens at the end face 32b.

When the motor 10 is operating, the coolant is supplied to the inside of the case 50. The coolant is supplied from the coolant supply channel 53a to the annular coolant flow channel 56. The coolant in the annular coolant flow channel 56 flows to the coolant discharge channel 62 and the in-core coolant flow channel 39. The coolant that flows into the coolant discharge channel 62 is discharged toward the coil end 42a. Thus, the coil end 42a is cooled. The coolant discharged toward the coil end 42a flows to the lower portion of the case 50. Also, the coolant that has flowed into the in-core coolant flow channel 39 flows through the third flow channel 37d. The third flow channel 37d is provided within the teeth 34. Accordingly, the coil 40 wound around the teeth 34 is efficiently cooled by the coolant flowing through the third flow channel 37d. In particular, in the present embodiment, the third flow channel 37d is provided on the boundary between the teeth 34 and the back yoke 33, and accordingly the teeth 34 and the back yoke 33 can be cooled effectively. The coolant that has flowed through the third flow channel 37d to the downstream end thereof is discharged from the end face 32b. The coil end 42b is cooled by the coolant discharged from the end face 32b. The coolant discharged from the end face 32b flows to the lower portion of the case 50. The coolant that has flowed to the lower portion of the case 50 is sent from the coolant ejection channel 53b to the coolant supply channel 53a via the external pump.

As described above, the motor 10 is cooled by the coolant flowing inside the case 50. The in-core coolant flow channel 39 extends from the inlet on the outer peripheral side of the guide ring 60 to the third flow channel 37d on the inner peripheral side from the guide ring 60, and accordingly the coil 40 wound around the stator core 32 on the inner peripheral side of the guide ring 60 can be efficiently cooled.

Also, in the motor 10, the guide ring 60 is interposed between the case 50 and the stator core 32 in the axial direction. According to this configuration, the connection portion between the guide ring 60 and the case 50, and the connection portion between the guide ring 60 and the stator core 32, can be tightly connected, regardless of accuracy of form of the guide ring 60. Also, pressure can be applied to the connection portion between the guide ring 60 and the case 50, and to the connection portion between the guide ring 60 and the stator core 32, simply by stacking the partition wall 54 of the case 50, the guide ring 60, and the stator core 32 in that order. This enables of these connection portions to be appropriately sealed. In particular, when sealing members are disposed at these connection portions, pressure is appropriately applied to the sealing members, and accordingly these connection portions can be appropriately sealed. This enables leakage of the coolant to be suppressed at the connection portions and flow rate of the coolant in each flow channel to be accurately controlled. Also, in the motor 10, the stator core 32 is in contact with the stepped portion 59 of the case 50 in the axial direction. Accordingly, pressure can be appropriately applied to the connection portion between the stator core 32 and the stepped portion 59, and this connection portion can be appropriately sealed. Note that disposing a sealing member at the connection portion between the stator core 32 and the stepped portion 59 can further improve sealing performance of this connection portion. Improving the sealing performance of the connection portion between the stator core 32 and the stepped portion 59 enables leakage of the coolant at this connection portion to be suppressed, and the flow rate of the coolant in each flow channel can be controlled more accurately. Note that even if the coolant does flow to the outer peripheral face 32c of the stator core 32 via the connection portion between the stator core 32 and the stepped portion 59, this is not problematic in particular. Accordingly, when accurate control of the flow rate of the coolant in each flow channel is not all that important, low sealing performance of the connection portion between the stator core 32 and the stepped portion 59 is acceptable.

Also, in the motor 10, the recessed portions 58 are present on the inner face 52a of the case 50. The technology of connecting and sealing the outer peripheral face of the guide ring and the inner peripheral surface of the case, as disclosed in JP 2017-204980, is not able to obtain appropriate sealing properties when recessed portions are present on the inner peripheral face of the case. That is to say, leakage of the coolant will occur at the recessed portions. In contrast, with the present embodiment, the guide ring 60 and the case 50 are connected in the axial direction, and accordingly even when recessed portions 58 are present on the inner face 52a of the case 50, the connection portion between the guide ring 60 and the case 50 can be properly sealed.

Also, in the motor 10, the inner diameter of the guide ring 60 is larger than the outer diameter of the coil end 42a. Accordingly, the guide ring 60 can be attached to the stator core 32 after the stator 30 is completed by winding the coil 40 around the stator core 32. That is to say, a process of winding the coil 40 around the stator core 32 can be carried out in a state without the guide ring 60 being present. Accordingly, the stator 30 can be efficiently manufactured.

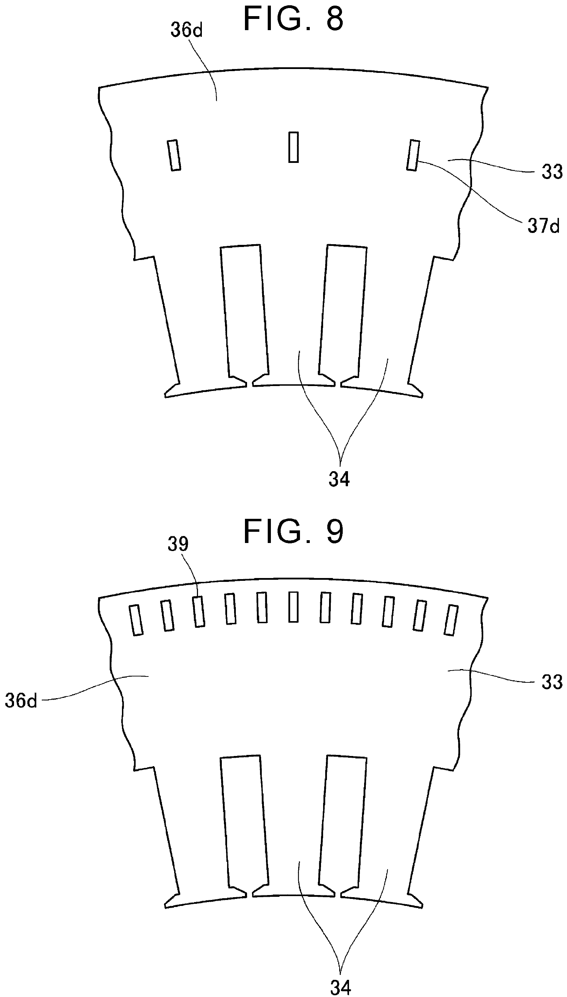

In the embodiment described above, the third flow channel 37d is provided at the boundary between the teeth 34 and the back yoke 33. However, as illustrated in FIG. 7, the entire third flow channel 37d may be provided within the teeth 34. Also, as illustrated in FIG. 8, the entire third flow channel 37d may be provided inside the back yoke 33. Also, as illustrated in FIG. 9, multiple in-core coolant flow channels 39 may be provided densely on an outermost periphery portion of the back yoke 33.

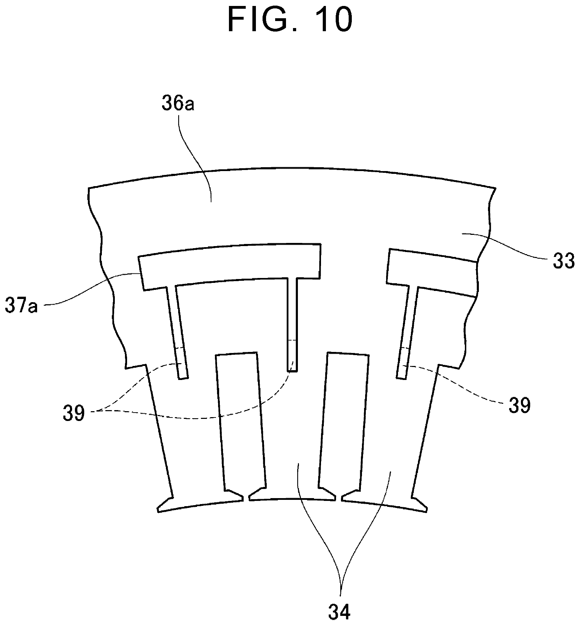

Also, in the above-described embodiment, an inlet (i.e., through hole 37a) is provided independently for each in-core coolant flow channel 39, but as illustrated in FIG. 10, a through hole 37a may be provided so as to span multiple in-core coolant flow channels 39.

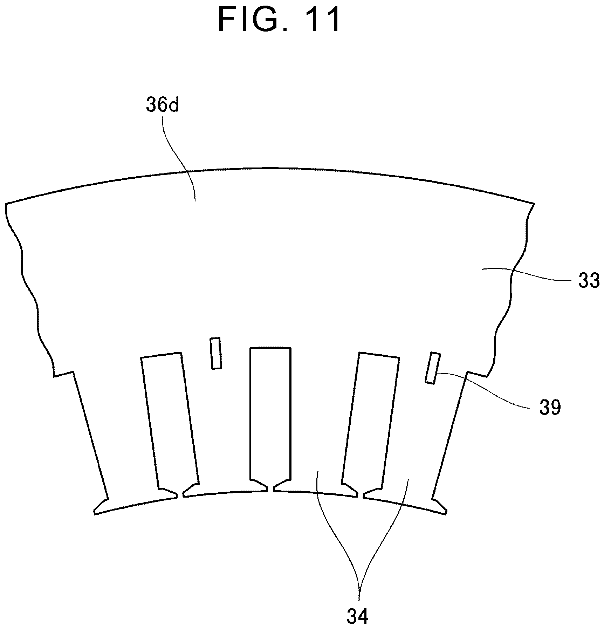

Further, in FIGS. 6 to 8, one in-core coolant flow channel 39 is provided for one tooth 34, but the number of in-core coolant flow channels 39 may be fewer than the number of teeth 34. For example, as illustrated in FIG. 11, one in-core coolant flow channel 39 may be provided for two teeth 34. Reducing the number of in-core coolant flow channels 39 in this way enables reduction in pressure loss in the coolant flow channels.

In the above-described embodiment, the guide ring 60 is provided with the coolant discharge channel 62. However, the guide ring 60 does not necessarily have to be provided with the coolant discharge channel 62. In this case, improving sealing performance at the connection portion between the guide ring 60 and the partition wall 54, and at the connection portion between the guide ring 60 and the end face 32a, enables the coolant to flow more efficiently over the annular coolant flow channel 56.

Also, in the above-described embodiment, the stator core 32 is fixed to the case 50 by the bolts 49. However, the stator 30 may be fixed to the case 50 by shrink fitting. In shrink fitting, the stator 30 is placed in the case 50 in a state in which the case 50 is heated, following which the case 50 is cooled and caused to shrink. The inner face 52a of the case 50 thus is made to come into close contact with the outer peripheral face 32c of the stator core 32, and the stator 30 is fixed to the case 50. In this case, the recessed portions 58 and the protruding portions 38 can be eliminated from the inner face 52a of the case 50 and the outer peripheral face 32c of the stator core 32. In this way, even when the stator 30 is fixed to the case 50 by shrink fitting, the annular coolant flow channel 56 can be easily formed by disposing the guide ring 60 so as to be interposed between the partition wall 54 and the end face 32a.

In addition, in the above-described embodiment, the partition wall 54 and the outer peripheral wall 52 are integral, but the partition wall 54 may be configured as a separate body from the outer peripheral wall 52, and the partition wall 54 may be fixed to the outer peripheral wall 52 by bolts or the like.

Also, in the above-described embodiment, the first flow channel is made up of one magnetic steel plate 36a, but the first flow channel may be made up of a multiple magnetic steel plates that are stacked. Also, in the above-described embodiment, the second flow channel is made up of multiple magnetic steel plates 36b and 36c that are stacked, but the second flow channel may be made up of a single magnetic steel plate.

Also, in the above-described embodiment, sealing members are provided at the connection portion between the guide ring 60 and the end face 32a, and at the connection portion between the guide ring 60 and the partition wall 54, but sealing members do not have to be provided. For example, forming the guide ring 60 from a highly flexible resin may enable high sealing performance to be realized without using a sealing member in some cases. Also, the guide ring 60 may be made of metal, in order to increase strength of the guide ring 60. Also, a structure may be made in which a groove is provided in the partition wall 54, and the guide ring 60 is in contact with the partition wall 54 within the groove. Also, in FIG. 4, the diameter of the guide ring 60 increases the closer toward the partition wall 54, but the diameter of the guide ring 60 may decrease the closer toward the partition wall 54, or the diameter of the guide ring 60 may be constant regardless of the position in the axial direction.

Also, in the embodiment, the downstream portion of each in-core coolant flow channel 39 extends linearly as illustrated in FIG. 2, but the downstream portion may be shifted outward in the radial direction in a stepped manner, in the same way as at the upstream portion (i.e., FIG. 4). This enables the coolant to be efficiently supplied to the coil end 42b.

While embodiments are described in detail above, these embodiments are merely exemplary, and are not intended to limit the scope of the claims. The technology described in the claims includes various modifications and alterations of the specific examples described above. The technical elements described in the present specification or illustrated in the drawings exhibit technical utility solely or in various combinations, and are not limited to the combinations described in the claims as filed. Also, the technology exemplified in the present specification or in the drawings may simultaneously achieve a plurality of objects, and exhibit technical utility in itself by achieving one of the objects.

## Claims

1. A motor (10), comprising:
a stator core (32);
a case (50) that houses the stator core (32), the case (50) including a facing portion (54) facing an end face (32a) of the stator core (32); and
a guide ring (60) that is housed in the case (50), that includes a ring shape extending around a motor axis, and that is interposed between the end face (32a) and the facing portion (54), wherein:
an annular coolant flow channel (56) is configured by a space surrounded by an inner face of the case (50), an outer peripheral face of the guide ring (60), and the end face (32a);
a plurality of in-core coolant flow channels (39) is provided inside the stator core (32);
an inlet of each of the in-core coolant flow channels (39) opens onto the end face (32a) at a position on an outer side in a radial direction from the guide ring (60); and
the inlet of each of the in-core coolant flow channels (39) is connected to the annular coolant flow channel (56).

2. The motor according to claim 1, further comprising a coil (40) that is wound around the stator core (32) at a position on an inner side in the radial direction from the guide ring (60), wherein each of the in-core coolant flow channels (39) includes
a first flow channel (37a) that is disposed on the outer side in the radial direction from the guide ring (60) and that is connected to the inlet,
a second flow channel that extends from a position on the outer side in the radial direction from the guide ring (60) to a position on the inner side from the guide ring (60), and that is connected to the first flow channel, and
a third flow channel (37d) that is disposed on the inner side in the radial direction from the guide ring (60), and that extends in an axial direction, and that is connected to the second flow channel.

3. The motor according to claim 2, wherein the second flow channel extends in the radial direction.

4. The motor according to claim 2 or 3, wherein:
the stator core (32) is made up of a plurality of magnetic steel plates stacked in the axial direction;
the magnetic steel plates include a first magnetic steel plate (36a), a second magnetic steel plate, and a third magnetic steel plate (36d);
the first magnetic steel plate (36a) that is present in a range including the end face (32a), is provided with a first through hole (37a) that is disposed on the outer side in the radial direction from the guide ring (60);
the second magnetic steel plate that is adjacent to the first magnetic steel plate (36a), is provided with a second through hole extending along the radial direction;
a third through hole (37d) is provided in the third magnetic steel plate (36d) that is adjacent to the second magnetic steel plate, the third through hole (37d) is disposed on the inner side in the radial direction from the guide ring (60);
the first through hole (37a) makes up the first flow channel (37a);
the second through hole makes up the second flow channel; and
the third through hole (37d) makes up the third flow channel (37d).

5. The motor according to claim 2 or 3, wherein:
the stator core (32) includes a back yoke (33) and a plurality of teeth (34) protruding toward an inner side in the radial direction from the back yoke (33);
the coil (40) is wound around the teeth (34); and
the third flow channel (37d) is provided inside a corresponding one of the teeth (34).

6. The motor according to claim 5, wherein the third flow channel (37d) is provided at a boundary between the back yoke (33) and the corresponding one of the teeth (34).

7. The motor according to any one of claims 1 to 3, wherein:
the end face (32a) is provided with a coil end (42a); and
an inner diameter of the guide ring (60) is larger than an outer diameter of the coil end (42a).

8. The motor according to claim 2 or 3, wherein:
a coil end (42a) is provided on the inner side in the radial direction from the guide ring (60); and
the guide ring (60) is provided with a coolant discharge channel (62) that passes through the guide ring (60) in the radial direction.

9. The motor according to any one of claims 1 to 3, wherein:
the case (50) includes a contact portion (59) that comes into contact with the end face (32a); and
a seal member is provided at an interface of the end face (32a) and the contact portion (59).

10. The motor according to any one of claims 1 to 3, wherein a recessed portion is provided on an inner peripheral face of the case (50).
